# EUROPÄISCHE PATENTSCHRIFT

(11) **EP 2 559 363 B1**
(45) Veröffentlichungstag und Bekanntmachung des Hinweises auf die Patenterteilung: **03.06.2015**
(21) Anmeldenummer: 12179832.6
(22) Anmeldetag: 09.08.2012
(51) Int. Cl.: A47J 43/08

(54) **Werkzeug für ein motorbetriebenes Küchengerät sowie Küchengerät**
Tool for a motorised kitchen appliance and kitchen appliance
Outil pour un appareil de cuisine motorisé ainsi qu'appareil de cuisine

(30) Priorität: 16.08.2011 DE 102011081050
(43) Veröffentlichungstag der Anmeldung: 20.02.2013
(73) Patentinhaber: BSH Hausgeräte GmbH, 81739 München (DE)
(72) Erfinder: Cater, Matej, 3301 Petrovce (SI); Jegrisnik, Uros, 3313 Polzela (SI); Mazej, Stanislav, 3303 Gomilsko (SI); Sajevic, Samo, 4000 Kranj (SI)

(56) Entgegenhaltungen:
- DE-C- 857 878
- DE-C- 976 974
- US-A- 2 616 673

## Beschreibung

### Gebiet der Erfindung

Die Erfindung betrifft ein Werkzeug für ein motorbetriebenes Küchengerät, an dem ein Instrument für die Bearbeitung von Lebensmitteln angeordnet ist und das eine motorisch antreibbare Antriebswelle aufweist, sowie ein Küchengerät mit einem solchen Werkzeug.

### Hintergrund der Erfindung

Die DE 976 974 C bezieht sich auf eine aus zwei Kupplungshälften bestehende Steckkupplung zum leicht lösbaren Verbinden einer Motorwelle mit einer Arbeitswelle eines Küchengeräts, wobei die eine Kupplungshälfte aus einem Kunststoffpreßteil mit an seiner Nabe radial angeordneten Mitnehmern besteht, die in entsprechende Ausnehmungen der anderen Kupplungshälfte eingreifen. In dem Gehäuse des Küchengeräts befindet sich ein Elektromotor, dessen Ankerwelle eine Kupplungshälfte trägt. Ein Mixbecher bildet das von dem Küchengerät anzutreibende Anschlussgerät, dessen Anschlusswelle die Gegenkupplungshälfte trägt. Zum Anschließen des Geräts wird der Sockel desselben in eine passende Vertiefung im Motorgehäuse eingesetzt, wobei die Kupplungshälften ineinandergreifen. Als Wellenkupplung sind laut dieser Schrift Bruchbolzenkupplungen bekannt, bei denen ein die Welle verbindender Bolzen bei Überlastung abgeschert wird.

Die US 2616673 A zeigt und beschreibt einen Nahrungsmittelmixer. Am hinteren Ende eines Antriebsschaftes ist ein Planetenkopf angeordnet, der mittels eines Scherbolzens an dem Antriebsschaft befestigt ist. Ein Werkzeugantrieb ist drehbar an einer vertikalen Achse angeordnet, die in dem Planetenkopf, bezogen auf den Antriebsschaft, versetzt angeordnet ist. Die Werkzeugantriebsachse ist lösbar mit dem Schaft des Werkzeugs verbindbar, wobei geeignete Klemmmittel vorhanden sind, um das Werkzeug in Stellung zu halten, so dass sich der Werkzeugschaft in bekannter Weise mit dem Antriebsschaft in einer eingreifenden Verbindung befindet.

Die DE 857 878 C beschreibt allgemein, dass Maschinen zum Schutz vor außergewöhnlicher Beanspruchung Bruchbolzensicherungen aufweisen können. Solche Bruchbolzen können einfach und preisgünstig ersetzt werden. Es wird vorgeschlagen, einen von zwei durch Bruchbolzen miteinander verbundene Teile in Achsrichtung verschiebbar anzuordnen und die beiden Teile an den gegeneinanderzeigenden Stirnflächen mit klauenförmigen abgeschrägten Ansätzen zu versehen, mit denen sie sich nach Zerstörung der Bruchbolzen voneinander abweisen. Weiterhin sollen die beiden Kupplungsteile so ausgebildet werden, dass sie sich möglichst nur mit achsnormalen Stirnflächen berühren.

Aus DE 89 09 680 U1 ist eine Küchenmaschine mit einem Zubehörgerät zur Bearbeitung von Lebensmitteln bekannt, wobei das Zubehörgerät eine Antriebswelle mit einer Kupplungseinrichtung zur Verbindung mit einer Abtriebswelle der Küchenmaschine aufweist und wobei die Antriebswelle einen in eine Querbohrung der Antriebswelle eingepressten Querstift aus Stahl umfasst, dessen Endabschnitte in ein mit der Abtriebswelle der Küchenmaschine kuppelbares Kupplungsteil eingreifen. Das Kupplungsteil ist aus Kunststoff ausgebildet und kann mit Fasern verstärkt sein. Das Kupplungsteil stellt eine Sollbruchstelle dar, wobei bei Überlastung eine Kupplungsnabe des Kupplungsteils bricht. In einer alternativen Ausführungsform ist die Sollbruchstelle dadurch ausgebildet, dass der Querstift einen Verbindungskorb des Kupplungsteils zerbricht, der in Umfangsrichtung weisende Schlitze aufweist, in die die Endabschnitte des Querstiftes eingreifen.

Wird das Instrument einer derartigen Küchenmaschine, das beispielsweise als Schneidmesser zum Schneiden von Lebensmitteln ausgebildet sein kann, beim Betrieb blockiert, etwa durch einen harten Kern einer zu schneidenden Frucht, so soll die Sollbruchstelle das Getriebe der Küchenmaschine sowie Teile des Werkzeugs vor Beschädigungen schützen. Durch Brechen der Kupplungsnabe bzw. des Verbindungskorbs ist jedoch keine eindeutige Bruchfläche definiert, so dass nicht immer sichergestellt ist, dass nicht doch durch verbliebene Bruchstücke eine Drehmomentübertragung oder gar ein Blockieren des Antriebs erfolgt.

Aus DE 195 05 736 C1 ist eine Haushaltsküchenmaschine bekannt, in der eine Trennvorrichtung angeordnet ist, wobei ein erstes, einer Antriebswelle zugeordnetes, und ein zweites, einem Werkzeug zugeordnetes, Kupplungsteil derart dimensioniert sind, dass ab einem Grenzdrehmoment das zweite Kupplungsteil vom ersten abhebt, wobei die Kupplungsvorrichtung rücksetzbar ausgekuppelt gehalten wird. Im Überlastfall bewegt sich das Werkzeug bzw. ein Mitnehmerteil entlang eines an der Arbeitswelle ausgeformten Gleitabschnitts, bis das erste und das zweite Kupplungsteil außer Eingriff kommen.

Aufgrund der zum Trennen des ersten und des zweiten Kupplungsteils notwendigen axialen Verschiebung ist die genannte Haushaltsküchenmaschine nicht unter allen Betriebsbedingungen, insbesondere bei Auftreten von Verschleiß oder Verschmutzung im Bereich des Gleitabschnitts der Antriebswelle, ausreichend sicher gegen Überlastung geschützt. Ferner besteht die Gefahr, dass nach Rücksetzen der Kupplungsvorrichtung die Küchenmaschine weiter betrieben wird, ohne dass der Grund für die Blockierung beseitigt worden ist, so dass bei mehrfachen kurz nacheinander folgenden Betriebsversuchen trotz Trennung der Kupplungsteile bei Überschreiten des Grenzdrehmoments eine Überhitzung des Motors auftreten kann.

Ferner ist ein Küchengerät der eingangs genannten Art bekannt, bei dem das Instrument über ein Verbindungsteil mit der Antriebswelle verbunden ist, wobei das Verbindungsteil im Wesentlichen in Form eines Hohlzylinders mit einer abschnittsweise verringerten Wandstärke ausgebildet ist. Der Bereich mit der verringerten Wandstärke wirkt als Sollbruchstelle, so dass bei einer Blockierung des Instruments das Verbindungsteil bricht und die Übertragung eines Drehmoments von der Antriebswelle auf das Instrument unterbrochen ist. Hierbei ist insbesondere nachteilig, dass nach Auftreten eines solchen Bruchs das Instrument einschließlich des Verbindungsteils ausgewechselt werden muss.

### Der Erfindung zugrundeliegende Aufgabe

Der Erfindung liegt die Aufgabe zugrunde, ein Werkzeug der eingangs genannten Art sowie ein Küchengerät zu schaffen, bei dem nicht nur eine erhöhte Sicherheit gegen Beschädigung des Antriebs, des Instruments und/oder anderer Teile des Werkzeugs bzw. des Küchengeräts bei Überlastung bzw. Blockierung des Instruments gewährleistet werden kann, sondern auch in dem Fall, dass eine Überlastung bzw. Blockierung aufgetreten ist, der notwendige Austausch von beschädigten Teilen auf ein Minimum reduziert ist.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch ein Werkzeug für ein motorbetriebenes Küchengerät mit den Merkmalen des Anspruchs 1 sowie durch ein Küchengerät mit den Merkmalen des Anspruchs 9.

Erfindungsgemäß ist bei einem Werkzeug für ein motorbetriebenes Küchengerät, an dem ein Instrument für die Bearbeitung von Lebensmitteln angeordnet ist und das eine motorisch antreibbare Antriebswelle aufweist, ein erstes Kupplungsstück koaxial zur Antriebswelle drehbar angeordnet und drehfest mit dieser verbunden. Ein zweites Kupplungsstück, an dem das Instrument angeordnet ist, ist ebenfalls koaxial zur Antriebswelle drehbar angeordnet. Das erste ist mit dem zweiten Kupplungsstück durch ein auswechselbares Zwischenstück drehfest gekoppelt, wobei das Zwischenstück zur Übertragung eines Drehmoments vom ersten auf das zweite Kupplungsstück mindestens einen in axialer Richtung weisenden Stift aufweist, der in eine Aufnahme eines Gegenstücks eingreift und der derart ausgebildet ist, dass er bei Überschreitung eines vorgegebenen Grenzdrehmoments bricht.

Das Instrument wird zur Bearbeitung von Lebensmittel, beispielsweise zum Schneiden oder Würfeln, über die von einem Motor angetriebene Antriebswelle, das erste Kupplungsstück, das Zwischenstück und das zweite Kupplungsstück, an dem das Instrument angeordnet ist, angetrieben. Eine drehfeste Kopplung zwischen dem ersten und dem zweiten Kupplungsstück erfolgt über den in axialer Richtung weisenden mindestens einen Stift, der in die Aufnahme des Gegenstücks eingreift und von diesem bei der Drehbewegung dadurch mitgenommen wird. Der Stift kann nur eine begrenzte Last aufnehmen, die einem vorgegebenen zwischen dem ersten und dem zweiten Kupplungsstück zu übertragenden Grenzdrehmoment entspricht, und bricht bei höherer Last. Hierdurch wird die Übertragung des Drehmoments unterbrochen. Das Grenzdrehmoment ist insbesondere durch die übrigen Teile des Antriebs und des Werkzeugs ohne Beschädigung übertragbar und kann derart gewählt werden, dass bei niedrigeren Drehmomenten eine Beschädigung des Motors, des Instruments oder anderer Teile des Werkzeugs oder des Antriebs sicher ausgeschlossen ist. Der mindestens eine Stift ist insbesondere derart ausgebildet, dass bei einer Blockierung des Instruments der Stift bricht, bevor ein Bruch des Instruments, des ersten oder des zweiten Kupplungsstücks, der Antriebswelle oder eines anderen Teils des Werkzeugs oder des Antriebs auftreten kann, d.h. das Grenzdrehmoment ist insbesondere niedriger als das durch die übrigen Teile des Werkzeugs und des Antriebs maximal übertragbare Drehmoment. Ferner kann der mindestens eine Stift insbesondere derart ausgebildet sein, dass dieser bricht, bevor der Motor durch eine Erhöhung des Motorstroms aufgrund einer Erhöhung des auf das Instrument übertragenen Drehmoments beschädigt werden kann. Das Zwischenstück ist auswechselbar ausgebildet und kann insbesondere nach dem Abbrechen des mindestens einen Stifts ohne größeren Aufwand aus dem Werkzeug entnommen und durch ein neues Zwischenstück ersetzt werden.

Dadurch, dass bei Überschreitung des Grenzdrehmoments der mindestens eine als Mitnehmer wirkende Stift bricht, wird eine Drehmomentbegrenzung unabhängig von einer möglichen Verschmutzung sowie unabhängig von möglichem Verschleiß erreicht. Hiermit wird unter allen Betriebsbedingungen und auch nach länger dauernder Benutzung die Übertragung eines Drehmoments, das höher ist als das vorgegebene Grenzdrehmoment, sicher verhindert. Dadurch, dass der Stift in axialer Richtung angeordnet ist, wird einerseits eine sichere Drehmomententkopplung bei Bruch des Stifts und andererseits eine leichte Entnehmbarkeit in axialer Richtung erreicht. Im Fall einer Überlastung braucht nur das Zwischenstück mit dem mindestens einen Stift ersetzt zu werden. Das Zwischenstück kann zur Ausführung der Aufgabe, eine drehmomentbegrenzte Kopplung zwischen dem ersten und dem zweiten Kupplungsstück zu vermitteln, sehr einfach aufgebaut sein, so dass ein Austausch des Zwischenstücks mit nur einem geringen Aufwand verbunden ist.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Bevorzugt ist das Zwischenstück im Wesentlichen zylinder- bzw. scheibenförmig ausgebildet und weist eine sich im Wesentlichen senkrecht zur Achse der Antriebswelle erstreckende ebene Endfläche auf. In vorteilhafter Weise weist das Gegenstück eine zu dieser im Wesentlichen parallele ebene Endfläche auf. Aus der Endfläche des Zwischenstücks ragt der mindestens eine Stift heraus und greift in eine in der Endfläche des Gegenstücks angeordnete Aufnahme, beispielsweise eine Bohrung, ein. Hierdurch wird erreicht, dass ein abgebrochener Teil des Stifts eine Drehbewegung des Zwischenstücks gegenüber dem Gegenstück nicht behindern kann. Hierdurch wird die Sicherheit bei der Begrenzung des maximal übertragbaren Drehmoments und damit die Sicherheit gegen eine Beschädigung des Werkzeugs bzw. des Küchengeräts weiter erhöht.

Sowohl das Zwischenstück als auch das Gegenstück sind insbesondere koaxial zur Achse der Antriebswelle drehbar angeordnet, wobei die Endflächen des Zwischenstücks und des Gegenstücks einander gegenüberliegend oder aneinander anliegend angeordnet sein können. Vorzugsweise sind die Endflächen des Zwischenstücks und des Gegenstücks aneinander anliegend angeordnet bzw. mit einem Abstand zueinander angeordnet, der kleiner als eine Breite des in axialer Richtung weisenden Stifts ist. Hierdurch wird erreicht, dass die Bruchstelle, an der der Stift bei Überschreitung des Grenzdrehmoments bricht, genau vorgegeben werden kann und dadurch das maximal übertragbare Drehmoment genauer vorbestimmt werden kann. Außerdem verbleibt der abgetrennte Teil des Stifts in diesem Fall in der Aufnahme, so dass ein Verklemmen besonders sicher vermieden werden kann.

Vorzugsweise umfasst das erste Kupplungsstück das Gegenstück, das hierdurch in einer drehfesten Verbindung mit der Antriebswelle steht. Das Zwischenstück ist in diesem Fall drehfest mit dem zweiten Kupplungsstück verbunden. Das Gegenstück kann ein integraler Bestandteil des ersten Kupplungsstücks sein und beispielsweise einstückig mit diesem ausgebildet sein. Insbesondere kann das erste Kupplungsstück als Gegenstück ausgebildet sein. Das Zwischenstück ist zur Übertragung des Drehmoments zum Antreiben des Instruments mit dem zweiten Kupplungsstück verbindbar und von diesem wieder trennbar. Hierdurch wird bei einfachem konstruktivem Aufbau eine sichere Funktion zur Begrenzung des Drehmoments sowie ein einfaches Auswechseln des Zwischenstücks gewährleistet.

In bevorzugter Weise ist das Zwischenstück drehfest, aber axial beweglich mit dem zweiten Kupplungsstück verbunden. Hierdurch wird einerseits ein Ausgleich von Toleranzen bzw. Achsenfehlern ermöglicht und andererseits das Entnehmen bzw. Einsetzen des Zwischenstücks zum Austauschen des Zwischenstücks nach dem Eintreten eines Überlastfalls erleichtert.

In vorteilhafter Weise weist das Zwischenstück mindestens ein Zahnmittel auf, das in eine entsprechende Ausnehmung des zweiten Kupplungsstücks eingreift. Hierdurch kann auf einfache Weise eine sichere, drehfeste und ggf. axial bewegliche Verbindung zwischen dem Zwischenstück und dem zweiten Kupplungsstück erzielt werden. So können beispielsweise mehrere derartige Ausnehmungen vorgesehen sein, die in gleichem Winkelabstand angeordnet sein sind, um ein einfaches Einsetzen eines zum Austausch vorgesehenen Zwischenstücks in das zweite Kupplungsstück zu ermöglichen. Es können auch mehrere Zahnmittel, etwa eine Mehrzahl von in gleichem Winkelabstand angeordneten Zähnen, vorgesehen sein, um eine besonders feste Drehverbindung zu ermöglichen.

Weiterhin ist es bevorzugt, dass das zweite Kupplungsstück das erste Kupplungsstück und das Zwischenstück in radialer Richtung umschließt. Hierfür kann das zweite Kupplungsstück insbesondere als rotationssymmetrische Hülle ausgebildet sein, die das erste Kupplungsstück und das Zwischenstück sowie ggf. die Antriebswelle aufnimmt. Hierdurch wird in dem Fall, dass das Werkzeug in einem Behälter angeordnet ist, der das bearbeitete Lebensmittel enthält, eine einfache und verschmutzungsfreie Funktion gewährleistet. In axialer Richtung kann in einer Richtung die Hülle offen sein, um ein einfaches Auswechseln des Zwischenstücks zu ermöglichen.

Gemäß einer bevorzugten Ausführung des erfindungsgemäßen Werkzeugs weist das Zwischenstück eine Mehrzahl von in axialer Richtung weisenden Stiften auf, die in gleichem Abstand von der Drehachse und insbesondere bezogen auf die Drehachse in gleichen Winkelabständen angeordnet sein können. Hierdurch kann eine genauere Vorherbestimmung des maximal übertragbaren Drehmoments sowie eine Vereinfachung beim Einsetzen eines zum Austausch vorgesehenen Zwischenstücks in das Werkzeug erreicht werden.

Weiterhin ist es bevorzugt, dass der mindestens eine Stift in die Aufnahme, insbesondere in eine Bohrung, des Gegenstücks mit radialem Spiel eingreift, um Toleranzen oder einen etwaigen Achsversatz auszugleichen. Ferner kann durch eine lockere Passung erreicht werden, dass nach dem Eintreten eines Überlastfalls beim Entnehmen des Zwischenstücks ein abgebrochenes Teil des Stifts von alleine aus der Aufnahme bzw. aus der Bohrung herausfallen gelassen werden kann, wodurch der Austausch des Zwischenstücks weiter vereinfacht wird.

Ferner kann der in axialer Richtung weisende Stift in vorteilhafter Weise eine Rastnase aufweisen, mit der dieser nach dem Einsetzen in das Gegenstück oder hinter das Gegenstück einrastet, so dass ein eingesetztes Zwischenstück am Gegenstück gehalten wird. Hierdurch wird der Austausch des Zwischenstücks weiter vereinfacht. Insbesondere können die Stifte zylindrisch ausgebildet sein, wobei die Rastnase über die Verlängerung der Umfangsfläche des Zylinders hinausragt. Wenn das Gegenstück scheibenförmig ausgebildet ist, kann beispielsweise die Rastnase von einer Fläche des Zwischenstücks, aus der der Stift herausragt, einen Abstand aufweisen, der mindestens der Dicke der Scheibe des Gegenstücks entspricht.

Weiterhin ist es bevorzugt, dass der Stift bzw. die Stifte in einem begrenzten Maße flexibel ausgebildet ist bzw. sind. Hierdurch wird nicht nur eine geräuschärmere Übertragung des Drehmoments von der Antriebswelle auf das Instrument erreicht, sondern auch ein Ausgleich von Toleranzen ermöglicht.

Ein erfindungsgemäßes Küchengerät weist ein Werkzeug wie vorstehend beschrieben auf. Die Antriebsachse eines solchen Werkzeugs kann beispielsweise fest mit dem Antrieb des Küchengeräts verbunden sein, kann aber auch von diesem lösbar ausgebildet sein. Im letzteren Fall kann das erfindungsgemäße Werkzeug beispielsweise zum Reinigen oder zum Austausch des Zwischenstücks von einer Antriebseinheit des Küchengeräts getrennt werden und zum Betrieb des Küchengeräts wieder mit diesem verbunden werden. Dabei kann es vorgesehen sein, dass weitere Elemente des Küchengeräts, etwa weitere Werkzeuge, oder auch ein Behälter zum Aufnehmen des zu bearbeitenden oder des bearbeiteten Lebensmittels, mit diesem lösbar verbunden werden können.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: ein Werkzeug gemäß einem Ausführungsbeispiel der Erfindung in Querschnittsdarstellung;
- Fig. 2: ein Zwischenstück zum Einsatz in einem Werkzeug gemäß Fig. 1 in vergrößerter perspektivischer Darstellung.

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

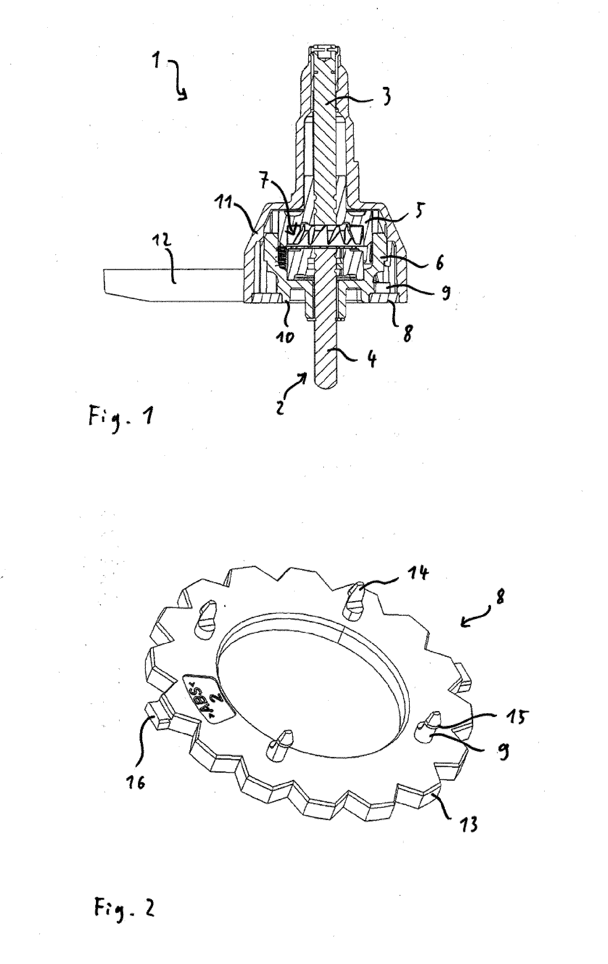

Fig. 1 zeigt ein Ausführungsbeispiel eines erfindungsgemäßen Werkzeugs 1 für ein motorbetriebenes Küchengerät. Eine Antriebswelle 2 ist ggf. über ein Getriebe mit einem nicht dargestellten Antriebsmotor des Küchengeräts verbunden oder lösbar verbindbar. In dem dargestellten Ausführungsbeispiel umfasst die Antriebswelle 2 einen oberen Abschnitt 3 und einen unteren Abschnitt 4, die miteinander drehfest gekoppelt bzw. koppelbar sind. Mit dem oberen Abschnitt 3 der Antriebswelle ist ein erstes Kupplungsstück 5 drehfest verbunden, das in seinem unteren Bereich mit einem Gegenstück 6 verbunden ist oder in dieses übergeht. Das Gegenstück 6 weist im oberen Bereich näherungsweise die Form eines Zylindermantels auf, der eine unten näher beschriebene Kopplungsvorrichtung 7 der Antriebswelle 2 umschließt und auf einen im Wesentlichen scheibenförmigen mittleren Bereich des Gegenstücks 6 aufgesetzt ist. Im unteren Bereich ist das Gegenstück 6 ebenfalls zylindrisch mit geringerem Durchmesser ausgebildet und umschließt koaxial drehbar den unteren Abschnitt 4 der Antriebswelle 2.

Im mittleren Bereich weist das Gegenstück 6 eine Mehrzahl von sich axial erstreckenden Ausnehmungen auf. Unterhalb des mittleren Bereichs des Gegenstücks 6 ist ein im Wesentlichen scheibenförmig ausgebildetes Zwischenstück 8 angeordnet, das von seiner Oberseite in axialer Richtung nach oben weisende Stifte 9 trägt. Die Stifte 9 greifen in die axial gerichteten Ausnehmungen des Gegenstücks 6 ein, wobei die Unterseite des mittleren Bereichs des Gegenstücks 6 der Oberseite des Zwischenstücks 8 eng benachbart ist bzw. zumindest teilweise auf dieser aufliegt. Die Oberseite des Zwischenstücks 8 bildet eine zur Antriebswelle 2 senkrecht stehende Ebene; die Unterseite des Gegenstücks 6 liegt zumindest teilweise in derselben oder in einer nahe benachbarten parallelen Ebene. Die Ausnehmungen des Gegenstücks 6 können beispielsweise als radiale, nach außen offene Einschnitte in den mittleren, im Wesentlichen scheibenförmigen Bereich des Gegenstücks 6 ausgebildet sein. Die Stifte 9 und damit das Zwischenstück 8 werden somit bei einer Rotation des ersten Kupplungsstücks 5 vom Gegenstück 6 mitgenommen. Das Zwischenstück 8 ist näherungsweise kreisringförmig ausgebildet und wird durch einen umlaufenden Kragen 10 des Gegenstücks 6, der am Innenrand des ringförmigen Zwischenstücks 8 anliegt, koaxial zur Antriebswelle 2 gehalten. An seinem Außenrand ist das Zwischenstück 8 drehfest mit einem zweiten, ebenfalls koaxial zur Antriebswelle 2 angeordneten Kupplungsstück 11 verbunden.

Das zweite Kupplungsstück 11 trägt ein Instrument zum Bearbeiten eines Lebensmittels, beispielsweise einen Mischflügel 12. Weitere Instrumente für die Bearbeitung von Lebensmitteln, wie etwa Schneidmesser, können direkt oder über ein Verbindungsteil mit dem oberen Teil des zweiten Kupplungsstücks 11 drehfest verbunden sein (nicht dargestellt). Das zweite Kupplungsstück 11 umschließt das erste Kupplungsstück 5, das Zwischenstück 8 sowie zumindest den oberen Abschnitt 3 der Antriebsachse 2 sowie die Kopplungsvorrichtung 7 in radialer Richtung und kann hierfür als näherungsweise rotationssymmetrische Hülle ausgebildet sein, die auf den oberen Abschnitt 3 der Antriebsachse 2 und das erste Kupplungsstück 5 aufgesetzt ist. Nach oben kann das zweite Kupplungsstück 11 offen sein, so dass der obere Abschnitt 3 der Antriebsachse 2 oder mit diesem verbundene Einrichtungen durch das zweite Kupplungsstück 11 nach oben hindurch ragen können. Das zweite Kupplungsstück 11 ist vorteilhaft nach unten offen, um ein Austauschen des Zwischenstücks 8 zu erleichtern. Das zweite Kupplungsstück 11 kann zur drehfesten Kopplung mit dem Zwischenstück 8 an seiner Innenwand Ausnehmungen aufweisen, in die am Umfang des Zwischenstücks 8 angeordnete Zähne eingreifen. Wenn das Werkzeug 1 in einen Behälter für zu bearbeitende oder bearbeitete Lebensmittel eingesetzt ist, schützt das zweite Kupplungsstück 11 das erste Kupplungsstück 5 und das Zwischenstück 8 vor Verschmutzung; hierfür kann außerdem im unteren Bereich eine nicht dargestellte Dichtung vorgesehen sein.

Wie in Fig. 2 zu erkennen ist, ist das Zwischenstück 8 im Wesentlichen kreisringförmig ausgebildet. An seinem Außenumfang weist es eine Mehrzahl von abgeflachten Zähnen 13 zum Eingreifen in entsprechende Ausnehmungen des zweiten Kupplungsstücks 11 auf, um eine drehfeste, jedoch beim Betrieb in gewissem Maße axial verschiebbare sowie in axialer Richtung trennbare Verbindung zwischen dem Zwischenstück 8 und dem zweiten Kupplungsstück 11 zu erzielen. Das Zwischenstück 8 trägt vier in axialer Richtung weisende Stifte 9, die in konstantem radialen Abstand von der Rotationsachse und in gleichen Winkelabständen angeordnet sind. Die Stifte 9 können mit dem Zwischenstück 8 einstückig ausgebildet oder an dieses angeformt bzw. an diesem befestigt sein oder können auch in entsprechende Bohrungen des Zwischenstücks 8 eingesetzt sein. Die Stifte 9 enden jeweils in einem Fortsatz 14, der eine über den Außenumfang des ansonsten zylindrischen Stifts hinausragende Rastnase 15 ausbildet. Die Rastnasen 15 greifen hinter entsprechende Rastvorsprünge des Gegenstücks 6 bzw. des ersten Kupplungsstücks 5, wodurch das Zwischenstück 8 innerhalb des Werkzeugs 1 gehalten wird. Die Stifte 8 weisen gegenüber den Rastnasen 15 angeordnete Aussparungen auf, die ein Entnehmen aus dem Werkzeug 1 bzw. dem ersten Kupplungsstück 5 nach Eintreten des Überlastfalls erleichtern. Zur einfacheren Handhabung und insbesondere zum Entnehmen des Zwischenstücks 8 aus dem zweiten Kupplungsstück 11 weist das Zwischenstück 8 Laschen 16 auf, die in Ausnehmungen am unteren Rand des zweiten Kupplungsstücks 11 eingreifen und von der Außenseite das zweiten Kupplungsstücks 11 her ergriffen werden können.

Wird beim Betrieb des Küchengeräts das Instrument blockiert oder auch beispielsweise durch die Bearbeitung eines zu zähen Guts nahezu blockiert, so erhöht sich zunächst das von der Antriebswelle 2 über deren oberen Abschnitt 3, das erste Kupplungsstück 5 und das Zwischenstück 8 auf das zweite Kupplungsstück 11 übertragene Drehmoment, da in einem solchen Fall in der Regel der Motorstrom eines elektrischen Antriebsmotors des Küchengeräts entsprechend ansteigt. Überschreitet nun das von dem ersten Kupplungsstück 5 auf das zweite Kupplungsstück 11 übertragene Drehmoment ein vorgegebenes Grenzdrehmoment, so brechen die Stifte 9 bzw. scheren an ihrer Basis ab, so dass die Scheibe des Zwischenstücks 8 nicht mehr vom ersten Kupplungsstück 5 und dem damit verbundenen Gegenstück 6 mitgenommen wird. Das Grenzdrehmoment kann dabei von dem unteren Abschnitt 4 der Antriebswelle 2, der Kopplungsvorrichtung 7, dem oberen Abschnitt 3 der Antriebswelle 2, dem ersten Kupplungsstück 5, dem scheibenförmigen Teil und den Zähnen 13 des Zwischenstücks 8, dem zweiten Kupplungsstück 11 und dem Instrument, beispielsweise dem Mischflügel 12, sowie den übrigen Teilen des Antriebs noch ohne Beschädigung übertragen werden; ferner tritt auch noch keine Überhitzung des Motors auf. Durch eine gewisse Flexibilität der Stifte 9 kann dabei erreicht werden, dass unter Ausgleich etwaiger Toleranzen alle Stifte 9 praktisch gleichzeitig ihre Belastungsgrenze erreichen. Das erste Kupplungsstück 5 dreht sich unter Mitnahme der abgebrochenen Teile der Stifte 9 in diesem Fall gegenüber dem vom zweiten Kupplungsstück 11 zurückgehaltenen scheibenförmigen Teil des Zwischenstücks 8 weiter. Da hierdurch kein wesentliches Drehmoment mehr übertragen wird, nimmt die Belastung eines Antriebsgetriebes und des Motors ab, so dass eine Beschädigung sicher vermieden wird. Ferner wird aufgrund der Entkopplung von der Antriebswelle auch kein wesentliches Drehmoment mehr auf die Instrumente übertragen, so dass auch eine Beschädigung der Instrumente vermieden wird.

Um das Küchengerät wieder in Betrieb zu nehmen, ist somit lediglich ein Austausch des Zwischenstücks 8 erforderlich. Hierfür kann beispielsweise das Werkzeug 1 aus dem Küchengerät entnommen werden und das Zwischenstück 8 ausgebaut werden. Hierfür wird das Zwischenstück 8, wenn es nicht schon unter der Wirkung der Schwerkraft aus dem zweiten Kupplungsstück 11 herausfällt, an den Laschen 16 ergriffen. Die abgebrochenen Teile der Stifte 9 fallen aus den Ausnehmungen des Gegenstücks 6, in denen die Stifte 9 mit Spiel geführt wurden, von selbst heraus. Entsprechend wird ein neues Zwischenstück 8 in das zweite Kupplungsstück 11 und in die Ausnehmungen des Gegenstücks 6 eingesetzt.

In dem dargestellten Ausführungsbeispiel ist eine Kopplungsvorrichtung 7 zur drehfesten, jedoch trennbaren Kopplung des unteren Abschnitts 4 der Antriebswelle 2, der mit einem Motor des Küchengeräts verbunden ist bzw. verbunden werden kann, mit dem oberen Abschnitt 3 der Antriebswelle 2 vorgesehen. Zur Betätigung der Kopplungsvorrichtung 7 kann der obere Abschnitt 4 der Antriebswelle 2 relativ zum Werkzeug 1 in axialer Richtung verschiebbar ausgebildet sein, so dass in einer unteren Stellung des oberen Abschnitts 3 der Antriebswelle 2 entsprechende Kupplungselemente der Kopplungsvorrichtung miteinander in Eingriff sind und in einer oberen Stellung voneinander getrennt sind.

In einem weiteren, nicht dargestellten Ausführungsbeispiel ist die Antriebswelle einstückig ausgebildet. In diesem Fall ist keine Kopplungsvorrichtung vorhanden. Das erste Kupplungsstück, das auf der einstückigen Antriebswelle drehfest gehalten ist, geht in das als Scheibe ausgebildete Gegenstück mit sechs in gleichem Abstand von der Drehachse sowie in gleichem Winkelabstand eingebrachten zylindrischen Bohrungen über. Unterhalb der Scheibe ist das kreisringförmige Zwischenstück mit sechs von seiner Oberseite in axialer Richtung weisenden, die Bohrungen durchgreifenden zylindrischen Stiften angeordnet. Die Unterseite des Gegenstücks ist der Oberseite des Zwischenstücks eng benachbart oder liegt auf dieser auf. Das Zwischenstück ist an seinem Außenrand drehfest mit dem zweiten Kupplungsstück verbunden, das auf seiner Außenseite ein oder mehrere Instrumente für die Bearbeitung von Lebensmitteln trägt. Dieses Ausführungsbeispiel weist somit gegenüber dem in den Figuren dargestellten Ausführungsbeispiel hinsichtlich der Ausführung der Stifte und des Gegenstücks eine vereinfachte Konstruktion auf.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Werkzeug
- 2: Antriebswelle
- 3: Oberer Abschnitt
- 4: Unterer Abschnitt
- 5: Erstes Kupplungsstück
- 6: Gegenstück
- 7: Kopplungsvorrichtung
- 8: Zwischenstück
- 9: Stift
- 10: Kragen
- 11: Zweites Kupplungsstück
- 12: Mischflügel
- 13: Zahn
- 14: Fortsatz
- 15: Rastnase
- 16: Ausnehmung
- 17: Lasche

## Patentansprüche

1. Werkzeug (1) für ein motorbetriebenes Küchengerät, an dem ein Instrument (12) für die Bearbeitung von Lebensmitteln angeordnet ist und das eine motorisch antreibbare Antriebswelle (2) aufweist, **wobei** ein erstes Kupplungsstück (5) koaxial zur Antriebswelle (2) drehbar angeordnet und drehfest mit der Antriebswelle (2) verbunden ist, **dadurch gekennzeichnet, dass** ein zweites Kupplungsstück (11) koaxial zur Antriebswelle (2) drehbar angeordnet ist und das Instrument (12) trägt und dass das erste Kupplungsstück (5) mit dem zweiten Kupplungsstück (11) durch ein auswechselbares Zwischenstück (8) drehfest gekoppelt ist, wobei das Zwischenstück (8) zur Übertragung eines Drehmoments vom ersten Kupplungsstück (5) auf das zweite Kupplungsstück (11) mindestens einen in axialer Richtung weisenden Stift (9) aufweist, der in eine Aufnahme eines Gegenstücks (6) eingreift und der derart ausgebildet ist, dass er bei Überschreitung eines vorgegebenen Grenzdrehmoments bricht.

2. Werkzeug (1) für ein motorbetriebenes Küchengerät nach Anspruch 1, **dadurch gekennzeichnet, dass** das Zwischenstück (8) und das Gegenstück (6) jeweils eine sich im Wesentlichen senkrecht zur Achse der Antriebswelle (2) erstreckende ebene Endfläche aufweisen, und dass der Stift (9) aus der Endfläche des Zwischenstücks (8) hervorsteht und in eine in der Endfläche des Gegenstücks (6) angeordnete Aufnahme eingreift.

3. Werkzeug (1) für ein motorbetriebenes Küchengerät nach Anspruch 2, **dadurch gekennzeichnet, dass** die Endflächen des Zwischenstücks (8) und des Gegenstücks (6) aneinander anliegend angeordnet sind.

4. Werkzeug (1) für ein motorbetriebenes Küchengerät nach einem der Ansprüche 1 bis 3, **dadurch gekennzeichnet, dass** das erste Kupplungsstück (5) das Gegenstück (6) umfasst und dass das Zwischenstück (8) drehfest mit dem zweiten Kupplungsstück (11) verbunden ist.

5. Werkzeug (1) für ein motorbetriebenes Küchengerät nach Anspruch 4, **dadurch gekennzeichnet, dass** das Zwischenstück (8) axial beweglich mit dem zweiten Kupplungsstück (11) verbunden ist.

6. Werkzeug (1) für ein motorbetriebenes Küchengerät nach Anspruch 4 oder 5, **dadurch gekennzeichnet, dass** das Zwischenstück (8) mindestens ein Zahnmittel aufweist, das in mindestens eine Ausnehmung des zweiten Kupplungsstücks (11) eingreift.

7. Werkzeug (1) für ein motorbetriebenes Küchengerät nach einem der Ansprüche 4 bis 6, **dadurch gekennzeichnet, dass** das zweite Kupplungsstück (11) das erste Kupplungsstück (5) und das Zwischenstück (8) radial umschließt.

8. Werkzeug (1) für ein motorbetriebenes Küchengerät nach einem der vorherigen Ansprüche, **dadurch gekennzeichnet, dass** das Zwischenstück (8) eine Mehrzahl von Stiften (9) aufweist, die in gleichem Abstand von der Drehachse und insbesondere in gleichen Winkelabständen angeordnet sind.

9. Werkzeug (1) für ein motorbetriebenes Küchengerät nach einem der vorherigen Ansprüche, **dadurch gekennzeichnet, dass** der mindestens eine Stift (9) beim Eingreifen in die Aufnahme in radialer und/oder Umfangsrichtung ein Spiel aufweist.

10. Werkzeug (1) für ein motorbetriebenes Küchengerät nach einem der vorherigen Ansprüche, **dadurch gekennzeichnet, dass** der mindestens eine Stift (9) eine Rastnase (15) aufweist zum Einrasten in oder hinter das Gegenstück (6).

11. Küchengerät mit einem Werkzeug (1) nach einem der vorherigen Ansprüche.

## Claims

1. Tool (1) for a motorised kitchen appliance on which an instrument (12) for the processing of foodstuffs is arranged and which has a drive shaft (2) able to be driven by a motor, wherein a first coupling piece (5) is arranged coaxially to the drive shaft (2) so as to be able to rotate and is connected in a torsion-proof manner to the drive shaft (2), **characterised in that** a second coupling piece (11) is arranged coaxially to the drive shaft (2) so as to be able to rotate and bears the instrument (12) and that the first coupling piece (5) is connected to the second coupling piece (11) by a replaceable intermediate piece (8) in a torsion-proof manner, wherein the intermediate piece (8), for transmitting a torque from the first coupling piece (5) to the second coupling piece (11), has at least one pin (9), pointing in an axial direction, which engages into a receptacle of a mating piece (6) and which is embodied such that it breaks when a predetermined limit torque is exceeded.

2. Tool (1) for a motorised kitchen appliance according to claim 1, **characterised in that** the intermediate piece (8) and the mating piece (6) each have a flat end surface extending essentially at right angles to the axis of the drive shaft (2), and that the pin (9) protrudes from the end surface of the intermediate piece (8) and engages into a receptacle arranged in the end surface of the mating piece (6).

3. Tool (1) for a motorised kitchen appliance according to claim 2, **characterised in that** the end surfaces of the intermediate piece (8) and of the mating piece (6) are arranged resting against one another.

4. Tool (1) for a motorised kitchen appliance according to one of claims 1 to 3, **characterised in that** the first coupling piece (5) includes the mating piece (6) and that the intermediate piece (8) is connected in a torsion-proof manner to the second coupling piece (11).

5. Tool (1) for a motorised kitchen appliance according to claim 4, **characterised in that** the intermediate piece (8) has an axially-movable connection with the second coupling piece (11).

6. Tool (1) for a motorised kitchen appliance according to claim 4 or 5, **characterised in that** the intermediate piece (8) has at least one meshing means which engages into at least one recess of the second coupling piece (11).

7. Tool (1) for a motorised kitchen appliance according to one of claims 4 to 6, **characterised in that** the second coupling piece (11) radially surrounds the first coupling piece (5) and the intermediate piece (8).

8. Tool (1) for a motorised kitchen appliance according to one of the preceding claims, **characterised in that** the intermediate piece (8) has a plurality of pins (9), which are arranged at an equal distance from the axis of rotation and especially at equal angular spacings.

9. Tool (1) for a motorised kitchen appliance according to one of the preceding claims, **characterised in that** the at least one pin (9) has a play when engaging into the recess in the radial and/or circumferential direction.

10. Tool (1) for a motorised kitchen appliance according to one of the preceding claims, **characterised in that** the at least one pin (9) has a latching lug (15) for latching into or behind the mating piece (6).

11. Kitchen appliance with a tool (1) according to one of the preceding claims.

## Revendications

1. Outil (1) pour un appareil de cuisine motorisé sur lequel est disposé un instrument (12) pour le traitement de produits alimentaires et qui présente un arbre d'entraînement (2) pouvant être entraîné par un moteur, où une première pièce d'accouplement (5) est disposée en pouvant tourner de façon coaxiale par rapport à l'arbre d'entraînement (2) et reliée à l'arbre d'entraînement (2) en étant solidaire en rotation, **caractérisé en ce qu'**une seconde pièce d'accouplement (11) est disposée en pouvant tourner de façon coaxiale par rapport à l'arbre d'entraînement (2) et supporte l'instrument (12), et **en ce que** la première pièce d'accouplement (5) est couplée, par une pièce intercalaire interchangeable (8), à la seconde pièce d'accouplement (11) en étant solidaire en rotation, où la pièce intercalaire (8) servant à la transmission d'un couple de la première pièce d'accouplement (5) à la seconde pièce d'accouplement (11) présente au moins une goupille (9) pointant dans la direction axiale, goupille qui s'engage dans un logement d'une pièce homologue (6) et qui est conçue de manière telle, que ladite goupille se casse en cas de dépassement d'un couple maximum prédéfini.

2. Outil (1) pour un appareil de cuisine motorisé selon la revendication 1, **caractérisé en ce que** la pièce intercalaire (8) et la pièce homologue (6) présentent respectivement une surface terminale plane s'étendant sensiblement de façon perpendiculaire à l'axe de l'arbre d'entraînement (2), et **en ce que** la goupille (9) fait saillie par rapport à la surface terminale de la pièce intercalaire (8) et s'engage dans un logement disposé dans la surface terminale de la pièce homologue (6).

3. Outil (1) pour un appareil de cuisine motorisé selon la revendication 2, **caractérisé en ce que** les surfaces terminales de la pièce intercalaire (8) et de la pièce homologue (6) sont disposées en venant en appui l'une contre l'autre.

4. Outil (1) pour un appareil de cuisine motorisé selon l'une quelconque des revendications 1 à 3, **caractérisé en ce que** la première pièce d'accouplement (5) comprend la pièce homologue (6), et **en ce que** la pièce intercalaire (8) est reliée à la seconde pièce d'accouplement (11) en étant solidaire en rotation.

5. Outil (1) pour un appareil de cuisine motorisé selon la revendication 4, **caractérisé en ce que** la pièce intercalaire (8) est reliée à la seconde pièce d'accouplement (11) en étant mobile axialement.

6. Outil (1) pour un appareil de cuisine motorisé selon la revendication 4 ou 5, **caractérisé en ce que** la pièce intercalaire (8) présente au moins un moyen denté qui s'engage dans au moins un creux de la seconde pièce d'accouplement (11).

7. Outil (1) pour un appareil de cuisine motorisé selon l'une quelconque des revendications 4 à 6, **caractérisé en ce que** la seconde pièce d'accouplement (11) entoure radialement la première pièce d'accouplement (5) et la pièce intercalaire (8).

8. Outil (1) pour un appareil de cuisine motorisé selon l'une quelconque des revendications précédentes, **caractérisé en ce que** la pièce intercalaire (8) présente une pluralité de goupilles (9) qui sont disposées à égale distance de l'axe de rotation et en particulier suivant des distances angulaires identiques.

9. Outil (1) pour un appareil de cuisine motorisé selon l'une quelconque des revendications précédentes, **caractérisé en ce que** l'au moins une goupille (9) présente du jeu, dans la direction radiale et/ou circonférentielle, lors de l'engagement dans le logement.

10. Outil (1) pour un appareil de cuisine motorisé selon l'une quelconque des revendications précédentes, **caractérisé en ce que** l'au moins une goupille (9) présente un ergot d'encliquetage (15) pour l'encliquetage dans ou derrière la pièce homologue (6).

11. Appareil de cuisine comprenant un outil (1) selon l'une quelconque des revendications précédentes.
